# EUROPÄISCHE PATENTSCHRIFT

(11) **EP 3 020 137 B1**
(45) Veröffentlichungstag und Bekanntmachung des Hinweises auf die Patenterteilung: **24.04.2019**
(21) Anmeldenummer: 14738783.1
(22) Anmeldetag: 03.07.2014
(51) Int. Cl.: H04B 1/707

(54) **VORRICHTUNG UND VERFAHREN ZUR SCHMALBANDIGEN DATENÜBERTRAGUNG MITTELS EINES DSSS-ÜBERTRAGUNGSSYSTEMS**
APPARATUS AND METHOD VOR NARROWBAND DATA TRANSMISSION USING A DSSS TRANSMISSION SYSTEM
APPAREIL ET PROCÉDÉ DE TRANSMISSION À BANDE ÉTROITE UTILISANT UN SYSTÈME DE TRANSMISSION DSSS

(30) Priorität: 08.07.2013 DE 102013213295
(43) Veröffentlichungstag der Anmeldung: 18.05.2016
(73) Patentinhaber: Continental Automotive GmbH, 30165 Hannover (DE)
(72) Erfinder: OPITZ, Martin, 93049 Regensburg (DE); REISINGER, Thomas, 93128 Regenstauf (DE)
(86) Internationale Anmeldenummer: PCT/EP2014/064144
(87) Internationale Veröffentlichungsnummer: WO 2015/003986

(56) Entgegenhaltungen:
- US-A1- 2004 091 034

## Beschreibung

Die vorliegende Erfindung betrifft die Nutzung eines DSSS-Übertragungssystems (DSSS = Direct Sequence Spread Spectrum) zur schmalbandigen Übertragung von Daten, insbesondere im Automobilbereich.

DSSS-Übertragungssysteme werden auch im Mobilfunkbereich verwendet. Die Publikation US 2004/0091034 A1 beschreibt die Schätzung von Rauschen in einem W-CDMA-Mobilfunksystem.

Spread-Spectrum-Übertragungssysteme (auf Frequenzspreizung basierende Übertragungssysteme) können beispielsweise im Automobilbereich verwendet werden, insbesondere zur Kommunikation zwischen Fahrzeug und einem mobilen Transceiver, welcher meist in einem Fahrzeugschlüssel angeordnet ist. Ein Sender im Fahrzeugschlüssel kann zum Fernsteuern unterschiedlicher Funktionen verwendet werden, beispielsweise zum Verriegeln bzw. Entriegeln der Türen des Fahrzeuges (diese Anwendung wird auch als "Keyless Entry" bezeichnet) sowie zum ferngesteuerten Starten des Motors, zur Aktivierung der Heizung oder Klimaanlage, etc.

Für die Fernsteuerung mancher dieser Funktionen (z.B. Aktivieren der Standheizung oder der Klimaanlage) ist eine bidirektionale Datenübertragung mittels Funk über verhältnismäßig große Distanzen (z.B. 2 bis 4 km) nötig bzw. erwünscht. Derartige Anwendungen werden im Automobilbereich auch als Long-RangeApplikationen bezeichnet.

Um die geforderten Reichweiten von 2 bis 4 km (im Freifeld) erzielen zu können, wird üblicherweise mit verhältnismäßig geringen Datenraten von ca. 2 kBit/s gearbeitet. Als Modulationsverfahren kommen im Automobilbereich üblicherweise Frequenzumtastung (FSK, Frequency Shift Keying), oder auch eine Gauß'sche Frequenzumtastung (GFSK, Gaussian FSK) zur Anwendung. Aber auch andere Modulationsverfahren, bspw. Amplitudenumtastung (ASK, Amplitude Shift Keying), sind möglich.

Ohne weitere Maßnahmen haben konventionelle Modulationstechniken (z.B. Frequenzumtastung, kurz FSK = Frequency Shift Keying) aufgrund dieser geringen Datenraten entsprechend geringe HF-Bandbreiten bei der Funk-Übertragung zur Folge.

In manchen Ländern (z.B. in den Mitgliedstaaten der Europäischen Union) sind derartige sogenannte Schmalbandübertragungen bis zu einer Ausgangsleistung bis zu +16, 15 dBm EIRP (EIRP = equivalent isotropic radiated power, äquivalente isotrope Sendeleistung) zulässig. In anderen Ländern (z.B. in den USA) ist eine konsistente "Verteilung" der Sendeleistung auf eine größere spektrale Bandbreite vorgeschrieben, um die benötigten Sendeleistungen aussenden zu dürfen (Homologationslimit: 30dBm an 500hm, praktisch angewendet ca. 20dBm). Hierzu sind die Frequenzspreizverfahren DSSS oder FHSS (Frequency Hopping Spread Spectrum) anzuwenden (vgl. FCC 15.249).

Um die unterschiedlichen gesetzlichen Rahmenbedingungen in unterschiedlichen Ländern zu erfüllen (z.B. Frequenzspreizung in den USA, schmalbandige Übertragung in Europa) sind also verschiedene Übertragungssysteme (Sender und Empfänger) nötig. Für die schmalbandige Übertragung wird im Automobilbereich üblicherweise als Modulationsverfahren eine Frequenzumtastung (FSK, Frequency Shift Keying), insbesondere auch eine Gauß'sche Frequenzumtastung (GFSK, Gaussian FSK) bei einer Datenrate ca. 2 kBit/s verwendet. Auch eine Amplitudenumtastung ist möglich.

In einem für alle Länder kompatiblen IC müssen dementsprechend beide Übertragungssysteme enthalten sein.

Eine der Erfindung zugrunde liegende Aufgabe besteht darin, ein digitales Übertragungsverfahren und ein entsprechendes Übertragungssystem zur Verfügung zu stellen, welches sowohl für eine (durch Frequenzspreizung) breitbandige Übertragung als auch für eine schmalbandige Übertragung konfigurierbar ist.

Diese Aufgabe wird durch ein Übertragungssystem gemäß Anspruch 1 sowie durch einen DSSS-Sender gemäß Anspruch 8 gelöst. Unterschiedliche Ausführungsbeispiele und Weiterentwicklungen der Erfindung sind Gegenstand der abhängigen Ansprüche.

Es wird ein System beschrieben, das sowohl für eine Spread-Spectrum als auch für eine schmalbandige Datenübertragung konfigurierbar ist. Gemäß einem Aspekt der Erfindung weist das System einen DSSS-Sender auf, der dazu ausgebildet ist, eine zu übertragende Bitfolge mit Hilfe einer Chip-Sequenz in eine Chipfolge umzusetzen und eine mit der Chipfolge korrespondierende Folge von Impulsen zu senden. Das System umfasst des Weiteren einen DSSS-Empfänger, der dazu ausgebildet ist, vom Sender gesendete Impulse über einen Übertragungskanal zu empfangen, und die empfangenen Impulse mit Hilfe eines Filters zu filtern. Der Filter weist eine Impulsantwort auf, welche von der Chip-Sequenz abhängt. Für die Spread-Spectrum-Datenübertragung ist als Chip-Sequenz eine Spreizsequenz einstellbar. Für die schmalbandige Datenübertragung kann eine Chip-Sequenz und eine entsprechende Impulsantwort des Filters eingestellt werden, wobei die Chip-Sequenz keine Folge mit zwei direkt aufeinanderfolgenden Vorzeichenwechseln umfasst und darüber hinaus nach dem ersten Chip und vor dem letzten Chip der Chip-Sequenz kein Vorzeichenwechsel auftritt. Eine derartige Chip-Sequenz ist schmalbandig im Vergleich zu einer breitbandigen Spreizsequenz.

Die Erfindung wird im Folgenden anhand von den in den Abbildungen dargestellten Beispielen näher erläutert. Die dargestellten Beispiele sind nicht unbedingt als für die Erfindung einschränkend zu verstehen, vielmehr wird Wert darauf gelegt, die der Erfindung zu Grunde liegenden Prinzipien zu erläutern. Es zeigten:
- Figur 1: ein Blockschaltbild eines Übertragungssystems zum Senden (a) mit binärer PSK-Modulation (Phasenumtastung) und Empfangen (b) der modulierten Signale;
- Figur 2: ein Blockschaltbild mit Sender (a) und Empfänger (b und c) eines Übertragungssystems mit DSSS-Modulation;
- Figur 3: ein Blockschaltbild mit Sender (a) und Empfänger (b) eines konfigurierbaren DSSS-Übertragungssystems gemäß einem Beispiel der Erfindung;
- Figur 4: unterschiedliche Diagramme betreffend eine pseudozufällige Spreizsequenz;
- Figur 5: unterschiedliche Diagramme betreffend eine schmalbandige Sequenz als Ersatz für die Spreizfrequenz aus Fig. 4;
- Figur 6: zeigt anhand von Zeitdiagrammen ein BPSK-Übertragungsverfahren mit symmetrischer Manchester-Codierung durch geeignete Wahl einer schmalbandigen Spreizsequenz und mit reduzierter Symbolrate;
- Figur 7: zeigt anhand von Zeitdiagrammen ein ähnliches BPSK-Übertragungsverfahren wie in Fig. 6, jedoch mit unsymmetrischer Manchester-Codierung;
- Figur 8: ein Blockschaltbild mit Sender für die Anwendung einer verketteten Spreizung mit zwei Spreizsequenzen.

In den Abbildungen bezeichnen gleiche Bezugszeichen gleiche oder ähnliche Komponenten oder Signale mit gleicher bzw. ähnlicher Bedeutung.

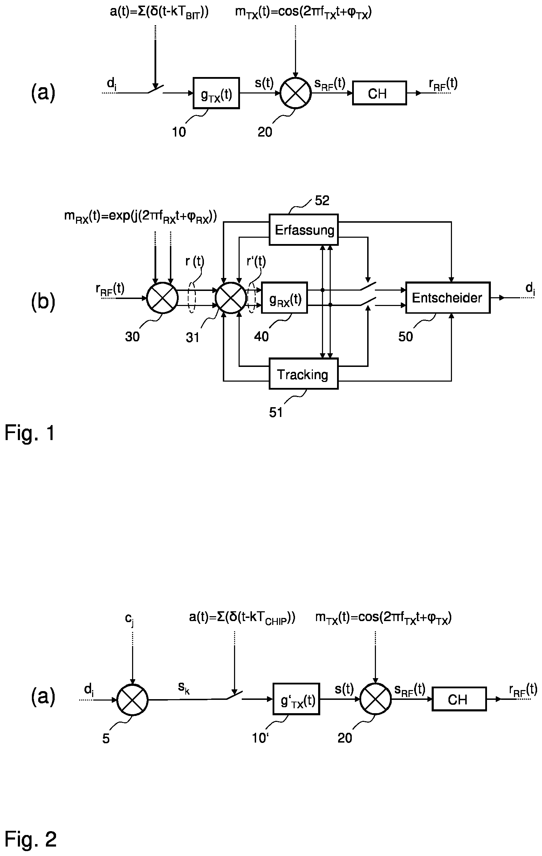

Figur 1 zeigt anhand eines Blockschaltbildes das Modell einer Datenübertragung für eine BPSK-Modulation (binäre Phasenumtastung, Binary Phase Shift Keying), welche beispielhaft für ein lineares Modulationsverfahren (z.B. QAM, PSK) gewählt wurde. Für jedes Datensymbol (Bit) dᵢ wird ein Impuls g_{TX}(t) ausgesendet. In dem in Fig. 1 gezeigten Modell wird dazu das Symbol dᵢ, welches die Werte +1 und -1 annehmen kann, periodisch mit einer Periodendauer T_{BIT} abgetastet und ein Dirac-Impuls δ(t-k·T_{BIT}) entsprechend der Polarität des Symbols dᵢ dem Filter 10 zugeführt, welches daraufhin seine Impulsantwort g_{TX}(t) mit einer Polarität ausgibt, die der Polarität des Symbols dᵢ entspricht. Das heißt, zu jedem Abtastzeitpunkt k·T_{BIT} (k ist ein ganzzahliger Zeitindex) gibt das Filter 10 abhängig vom Abtastwert (+1 oder -1) die Impulsantwort g_{TX}(t-k·T_{BIT}) oder -g_{TX}(t-k·T_{BIT}) aus. Die Summe der zeitlich versetzten Impulsantworten ergeben das zu übertragende Signal s(t). Dieses Signal s(t) wird mit Hilfe des Mischers 20 in den Hochfrequenzbereich (HF-Bereich) umgesetzt, wobei das Ausgangssignal des Mischers mit s_{RF}(t) bezeichnet ist. Dieses Signal s_{RF}(t) gelangt über den Übertragungskanal (d.h. eine Funkstrecke) zum Empfänger. Das Oszillatorsignal m_{TX}(t), das dem Mischer 20 zugeführt ist, weist eine (Träger-)Frequenz f_{TX} und eine Phase ϕ_{TX} auf. Das bedeutet, dass das Spektrum des Signals s_{RF}(t) im Vergleich zum Spektrum des Signals s(t) um den Betrag der Trägerfrequenz f_{TX} spektral verschoben ist. Das Blockschaltbild des beschriebenen Senders ist in Fig. 1a dargestellt, das korrespondierende Blockschaltbild des Empfängers in Fig. 1b.

Das über den Kanal CH übertragene (Hochfrequenz-)Signal s_{RF}(t) wird durch den Übertragungskanal CH verzerrt und auf dem Weg zum Empfänger mit Störungen und Rauschen überlagert. Das dem Signal s_{RF}(t) entsprechende Empfangssignal ist mit r_{RF}(t) bezeichnet.

Empfängerseitig wird das Empfangssignal r_{RF}(t) mit Hilfe einer komplexen Multiplikation 30 in das Basisband umgesetzt (mit Hilfe der empfängerseitigen nominellen Oszillatorfrequenz, d.h. Trägerfrequenz, f_{RX}).

Das Ergebnis der komplexen Multiplikation 30 umfasst ein Inphasen-Signal r_{I}(t) und ein entsprechendes Quadratur-Signal r_{Q}(t), wobei beide zusammen als komplexes Signal r(t) = r_{I}(t) + j·r_{Q}(t) bezeichnet sind (j ist die imaginäre Einheit).

Der Mischer 30 steht exemplarisch für eine (beliebig implementierte) Frequenzumsetzung des Nutzsignals in das Basisband. Diese Frequenzumsetzung kann in einem Schritt (Direct-Downconversion) oder in mehreren Schritten (mit mehreren aufeinander folgenden (komplexen) Multiplikationen) erfolgen.

Jedenfalls weist die spektrale Lage des Nutzsignals am Ausgang der Frequenzumsetzung (d.h. das Signal r(t)) lediglich einen Frequenzfehler f_{E} auf. Dieser Frequenzfehler f_{E} entspricht bspw. der Differenz der sender- und empfängerseitig verwendeten (Träger-) Frequenz zur Auf- bzw. Abwärtsumsetzung, d.h.: f_{E}=f_{TX}-f_{RX}. Dieser kommt dadurch zustande, dass in der Praxis sowohl auf der Sender- als auch auf der Empfängerseite die nominale Übertragungsfrequenz (Trägerfrequenz) nur mit endlicher Genauigkeit bereit gestellt werden kann, die verwendeten Frequenznormale (bspw. Quarze), aus denen die Frequenzen zu Auf- bzw. Abwärtsumsetzung abgeleitet werden, also fehlerbehaftet sind.

Die spektrale Lage des Nutzsignals am Ausgang der Frequenzumsetzung (d.h. das Signal r(t)) kann neben dem Frequenzfehler f_{E} auch weitere Frequenzfehleranteile aufweisen, welche bspw. durch den Doppler-Effekt bei der Funkübertragung über den Kanal CH entstehen können.

Bei einer kohärenten Demodulation muss auch ein Phasenfehler ϕ_{E} = ϕ_{TX} - ϕ_{RX} beachtet werden. Der Mischer 30 repräsentiert also ganz allgemein die (ein- oder mehrstufige) Umsetzung des empfangenen HF-Signals r_{RF}(t) ins Basisband.

Mit einer zweiten komplexen Multiplikation (Mischer 31) wird dieser (zuvor geschätzte) Frequenzfehler f_{E} korrigiert. Es verbleibt dann nur noch der Frequenzfehler der Frequenzschätzung. Der Mischer 31 repräsentiert also ganz allgemein (unabhängig von der konkreten Implementierung) die Korrektur des oben erwähnten Frequenzfehlers. Bei Verwendung einer kohärenten Demodulation kann auch der Phasenfehler ϕ_{E} bspw. über den Mischer 31 korrigiert werden.

Das (komplexe und im Rahmen der Schätzgenauigkeit nicht mehr frequenzfehlerbehaftete) Ausgangssignal r' (t) des zweiten Mischers 31 enthält, neben den erwähnten Verzerrungen und Störungen, die zeitlich versetzten Impulsantworten g_{TX}(t-k·T_{BIT}) bzw. -g_{TX}(t-k·T_{BIT}) entsprechend dem Sendesignal s (t) . Das Signal r'(t) ist einem Empfangsfilter 40 zugeführt, dessen Impulsantwort g_{RX}(t) an die gesendeten Impulsen g_{TX}(t) angepasst sein kann. Man spricht von einem sogenannten "Matched-Filter". Der Datenempfang mit Hilfe von Matched-Filter ist ans sich bekannt und wird daher nicht näher erläutert. Allerdings können abweichend von den bekannten theoretischen Zusammenhängen implementierungstechnische Vereinfachungen, insbesondere auf der Empfängerseite, getroffen werden (bspw. Raised-Cosine im Sender, aber Rectangular-Shaping im Empfänger).

Der Empfänger aus Fig. 1b umfasst des Weiteren eine Akquisitionseinheit 52 (Erfassungs-Einheit), die dazu ausgebildet ist, den erwähnten Frequenzfehler f_{E} (bei kohärenter Demodulation auch den Phasenfehler ϕ_{E}) zu schätzen bzw. zu bestimmen. Des Weiteren ist die Akquisitionseinheit 52 dazu ausgebildet, die Phasenlage der Spreizsequenz (beim DSSS-Betrieb) oder der Modulations-Symbole, d.h. der ausgesendeten Impulsantworten g_{TX}(t) (beim Schmalband-Betrieb) zu bestimmen.

Die Akquisitionseinheit 52 bestimmt den Frequenzfehler f_{E} und ggf. den Phasenfehler ϕ_{E}) sowie die Phasenlage der Spreizsequenz. Die Tracking-Einheit 51 ist dazu ausgebildet, bei einer zeitlichen Veränderung der Trägerfrequenzen f_{RX}, f_{TX} sowie der korrespondierenden Phasen ϕ_{RX}, ϕ_{TX}, sowie bei einer zeitlichen Veränderung der Phasenlage der Modulations-Symbole, die geschätzten Frequenz- und Phasenfehler f_{E}, ϕ_{E} nachzuregeln. Eine derartige Regelschleife wird auch als "Carrier Tracking Loop" bezeichnet. Des Weiteren ist die Tracking-Einheit 51 auch dazu ausgebildet, die geschätzte Phasenlage der empfangenen Modulations-Symbole nachzuregeln. Eine derartige Regelschleife wird auch als "Symbol Tracking Loop" bzw. "Clock Tracking Loop" bezeichnet. Die Regelschleifen (und damit die Tracking-Einheit) müssen nicht zwangsläufig vorhanden sein, z.B. wenn die von der Aquisitionseinheit geschätzten Werte für die Übertragung eines Frames ausreichend genau ist.

Aufgabe der Akquisitionseinheit ist also die (grobe) Bestimmung der Trägerfrequenz und der Phasen der Träger und der Spreizsequenz, jedoch keine Regelung. Erst im Tracking kommt üblicherweise eine geschlossene Regelschleife zur Anwendung, genau genommen sind es zwei Regelschleifen, nämlich die erwähnte "Carrier Tracking Loop" und die "Symbol Tracking Loop". Dieses Nachregeln des geschätzten Phasen- und Frequenzfehlers sowie der Phasenlage der Modulations-Symbole ist an sich bekannt und wird daher nicht näher erläutert. Die tatsächliche Implementierung spielt für die vorliegende Erfindung auch keine wesentliche Rolle.

Die in den Figuren dargestellten Blöcke (Mischer, Filter, Akquisitionseinheit, Trackingeinheit, etc.) sind nicht als bauliche Einheit sondern rein als funktionale Einheiten zu verstehen. Die können - je nach Anwendung - auf sehr unterschiedliche Weise implementiert werden. Die Mischer 5, 10, 30 und 31 repräsentieren eine mathematische Operation (ggf. eine komplexe Multiplikation). Akquisitions- und Trackingeinheit erzeugen also Signale der Form exp(j(2π·Δf·t+Δϕ)) für den jeweiligen Mischer 31, welcher damit eine Frequenzumsetzung um Δf sowie eine Phasendrehung um Δϕ realisiert. Auch diese komplexe Multiplikation steht exemplarisch für verschiedenste Realisierungsmöglichkeiten (bspw. mit einem oder mit zwei Multiplizieren/Mischern in beliebiger Reihenfolge).

Aufgabe der Erfassungs-Einheit 52 ist auch das Herausfinden der korrekten (Abtast-)Zeitpunkte (Bit- bzw. Symbolgrenzen), zu denen eine Entscheidung (Entscheider 50) betreffend den Wert eines gesendeten Datensymbols getroffen werden soll. Während des Tracking werden diese Zeitpunkte durch die Trackingeinheit 51 nachgeführt. Der erwähnte Frequenzfehler f_{E} (bzw. auch die Trägerphase ϕ_{RX} bei einer kohärenten Demodulation) des Nutzsignals wird durch die Erfassungseinheit 52 mit einer solchen Genauigkeit geschätzt, dass die Regelschleifen in der Tracking-Einheit (PLL oder FLL) gestartet werden können. Üblicherweise wird, wie in Figur 1b gezeigt, der Frequenzfehler vor der Filterung durch den Matched-Filter 40 korrigiert.

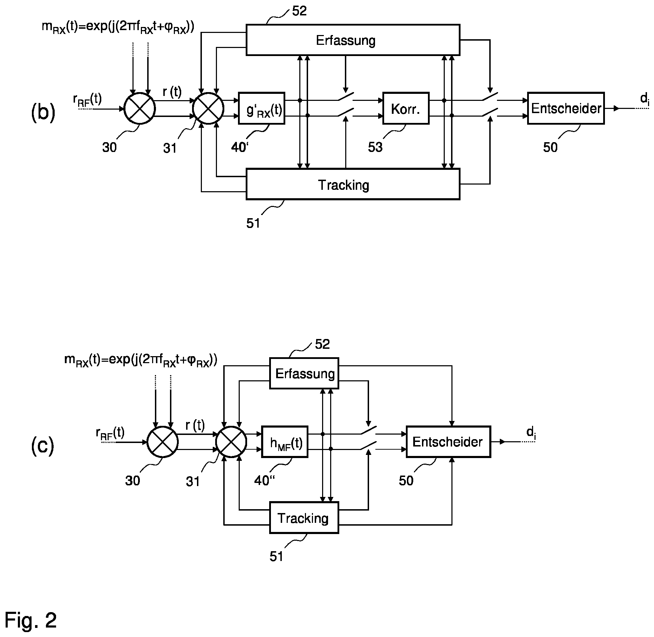

In der Figur 2 ist ein Modell einer DSSS-Datenübertragung als Blockschaltbild dargestellt. Figur 2a zeigt den Sender, Figur 2b den Empfangsteil. Bei einer DSSS-Übertragung wird jedes Datensymbol (Bit) dᵢ mit den Symbolen cⱼ der Spreizsequenz multipliziert. Die Spreizsequenz hat eine Länge L_{C}, und der Index j berechnet sich wie folgt: j = k mod L_{C}, wobei k ein fortlaufender Index ist (k = 0, 1, ...). Für jedes Bit werden, entsprechend dem Spreizfaktor L_{C}, eine Anzahl von L_{C} sogenannten Chips ausgesendet. Der Index i erhöht sich also mit jedem Durchlauf der Spreizsequenz der Länge L_{c} um eine ganze Zahl: i = └k / L_{C}┘. Die (Modulations-) Symbolform der Chips wird durch das Sendeimpulsfilter 10' (durch dessen Impulsantwort g'_{TX}(t)) bestimmt. Im Vergleich zu dem Sender aus Figur 1a wird die Chipfolge mit einer um den Faktor L_{C} höheren Rate abgetastet (Periode T_{CHIP} = T_{BIT}/L_{C}).

Durch Senden der Daten mit einer um ein Vielfaches der Bitrate T_{BIT} höheren Chiprate T_{CHIP}, wird - entsprechend der Eigenschaften der Spreizsequenz - auch eine Spreizung des Spektrums des Sendesignals s(t) bzw. s_{RF}(t) bewirkt.

Gemäß dem in Fig. 2b als Blockschaltbild dargestellten Empfängermodell wird empfängerseitig zunächst (gleich wie bei der BPSK-Übertragung gemäß Fig. 1) das empfangene Hochfrequenz-Signal r_{RF}(t) mit einer nominellen Oszillatorfrequenz f_{RF} gemischt (Mischer 30) und das resultierende (komplexwertige) Mischerausgangssignal r(r) einer weiteren Mischung (Mischer 31) unterzogen, um eventuelle Frequenzfehler f_{E} in der Oszillatorfrequenz f_{RX} auszugleichen (analog zum Beispiel aus Fig. 1b). Das demodulierte Empfangssignal ist wie im Beispiel aus Fig. 1b mit r' (t) bezeichnet und enthält die empfangene Folge von Impulsantworten g_{TX}(t-k·T_{CHIP}) des senderseitigen Filters 40' . Das demodulierte Empfangssignal r'(t) wird (ebenso analog zu dem Beispiel aus Fig. 1b) einem Matched-Filter 40' mit der Filterimpulsantwort g'_{RX}(t) zugeführt, welche an die Impulsantwort g_{TX}(t) angepasst ist. Die Detektion der Chipgrenzen (d.h. die Phasenlage der Modulations-Symbole) erfolgt analog zur Detektion der Bitgrenzen in dem vorherigen Beispiel (Fig. 1b) mit Hilfe der Erfassungs-Einheit 52 und der Tracking-Einheit 51.
Das Ausgangssignal des Matched-Filter 40' wird entsprechend der Chiprate T_{CHIP} abgetastet und die resultierende Chipsequenz mit der bekannten Spreizsequenz cⱼ korreliert (Korrelator 53). Das Korrelationsergebnis wird der Entscheider-Einheit 50 zugeführt, welche dem Korrelationsergebnis eine Bitfolge dᵢ zuordnet, welche der gesendeten Bitfolge entspricht.

Um das aufwändige Detektieren der Chipgrenzen zu vereinfachen, kann die Matched-Filterung der empfangenen Chip-Symbole mit anschließender Korrelation zu einer Matched-Filterung (mit modifizierter, von der Spreizsequenz cⱼ abhängiger Impulsantwort h_{MF}(t)) zusammengefasst werden. Die resultierende Struktur des Empfängers ist in Fig. 1c dargestellt. Bei einem Vergleich der Figuren 1a und 2a sowie der Figuren 1b und 2c erkennt man, dass sich die BPSK-Übertragung aus Fig. 1 von der DSSS-Übertragung aus Fig. 2 senderseitig nur durch die Multiplikation (Multiplikator 5) der zu übertragenden Bitfolge dᵢ mit der Spreizfrequenz cⱼ und empfängerseitig nur durch die Wahl der Impulsantwort des Matched-Filter 40 bzw. 40' unterscheidet.

Wie eingangs erläutert, kann es wünschenswert sein, dasselbe Übertragungssystem sowohl für eine (durch Frequenzspreizung) breitbandige Übertragung als auch für eine schmalbandige Übertragung zu konfigurieren. Aus Gründen der Implementierungseffizienz (bspw. benötigte Chipfläche) soll jedoch nicht von einem DSSS-Empfänger auf einen BPSK Empfänger umgeschaltet werden. Vielmehr soll der DSSS-Empfänger für einen Empfang schmalbandiger phasenmodulierter Signale verwendet werden.

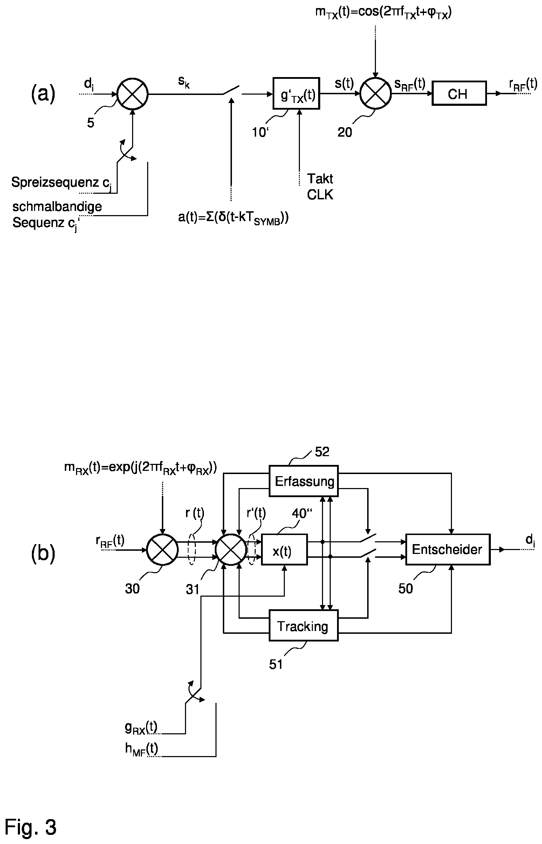

Das in Fig. 3 als Blockschaltbild dargestellte DSSS-Übertragungssystem erlaubt eine Umkonfiguration für die Übertragung schmalbandiger BPSK-modulierter Signale. Insbesondere die aufwändigen, im DSSS-Empfänger enthaltenen Algorithmen werden zum Schmalbandempfang wiederverwendet. Diese bieten, insbesondere hinsichtlich ihrer Leistungsfähigkeit die Takt- und Datenrückgewinnung betreffend ("Clock & Data Recovery"), eine sehr gute Performanz. Im Vergleich zu üblichen FSK-Schmalband-Empfänger-Implementierungen, kann eine um bis zu 7dB verbesserte Empfindlichkeit erreicht werden.

Das in Fig. 3 dargestellte Übertragungssystem entspricht im wesentlichen der Kombination aus den Beispielen aus Fig. 2a (Sender) und Fig. 2c (Empfänger). Senderseitig ist jedoch die Spreizfolge cⱼ, c_{j'} einstellbar gestaltet. Empfängerseitig kann die Impulsantwort des Matched-Filter 40 eingestellt werden (abhängig von der im Sender eingestellten Spreizfolge) . Optional kann auch die Symbolrate T_{SYMBOL} eingestellt werden, wozu ggf. auch eine Anpassung des Takts CLK für den Sende-Impuls-Filter 10 nötig ist. Im Übrigen gilt das in Bezug auf die oben genannten Beispiele entsprechend. Wahlweise kann zwischen verschiedenen Bandbreiten der Kanalfilter (nicht dargestellt) gewählt werden.

Das in Fig. 3 dargestellte Übertragungssystem ist also in einfacher Weise sowohl für eine Breitband-Übertragung (mittels DSSS-Verfahren) als auch für eine Schmalbandübertragung (z.B. nach dem BPSK-Verfahren) nutzbar. Dazu muss lediglich senderseitig die Spreizsequenz cⱼ verändert und empfängerseitig die Impulsantwort x(t) des Matched-Filter 40 angepasst werden.

In der Folge werden die Eigenschaften der Spreizsequenz cⱼ näher betrachtet. Die Eigenschaften der Autokorrelationsfunktion (AKF) der verwendeten Spreizsequenz cⱼ haben maßgeblichen Einfluss auf die spektralen Eigenschaften des ausgesendeten Signals s_{RF}(t) und die erreichbaren Leistungsparameter des Empfängers.

Für eine DSSS-Übertragung optimal geeignete Spreizsequenzen besitzen eine AKF, welche eine steile und relativ hohe Korrelationsspitze, idealerweise annähernd einen Dirac-Impuls, aufweisen. Pseudozufällige binäre Folgen (PRBS = pseudo-random binary sequence), bspw. sogenannten Maximum-Length-Sequenzen, weisen solche Autokorrelationseigenschaften auf und werden deswegen bei einer Spread-Spectrum-Übertragung üblicherweise als Spreizsequenzen cⱼ verwendet.

Einerseits ergibt sich senderseitig durch eine steile Korrelationsspitze eine optimale Spektrumspreizung (möglichst konstante spektrale Leistungsdichte des gespreizten Sendesignals s(t)), andererseits lassen sich damit eine optimale Empfindlichkeit und Immunität gegen Inband-Störer im Empfänger erreichen.

In CDMA-Systemen werden bspw. so genannte Gold-Sequenzen, also miteinander verknüpfte Maximum-Length-Sequenzen, zur Spektrumspreizung verwendet, welche zwar suboptimale, aber brauchbare AKF Eigenschaften besitzen, welche zudem eine "gute" Unterdrückung (also gute Kreuzkorrelationseigenschaften) gegenüber anderen Teilnehmern (mit anderer Gold-Sequenz) bieten. Generell basiert die Wahl der Spreizsequenz auf verschiedensten Anwendungs- und Optimierungszielen wie z.B. Orthogonalität, Korrelationseigenschaften, Implementierungskomplexität sowie auch Peak-To-Average Power Ratio PAPR (PA-Design). Die hier genannten pseudozufälligen Sequenzen (PRBS, pseudo random binary sequences) und Gold-Sequenzen können für die Frequenzspreizung verwendet werden. Darüber hinaus sind aber eine Vielzahl anderer Spreizcodes denkbar. Für einige Spreizcodes ist statt der in Fig. 2a gezeigten einfachen Multiplikation der Eingangsbitfolge dᵢ mit einer Spreizsequenz eine komplexere Signalverarbeitung nötig. Allgemein werden alle jene Chip-Sequenzen als "Spreizsequenzen" bezeichnet, welche für ein DSSS-Übertragungsverfahren (d.h. für eine spektrale Spreizung des Sendesignal) geeignet sind.

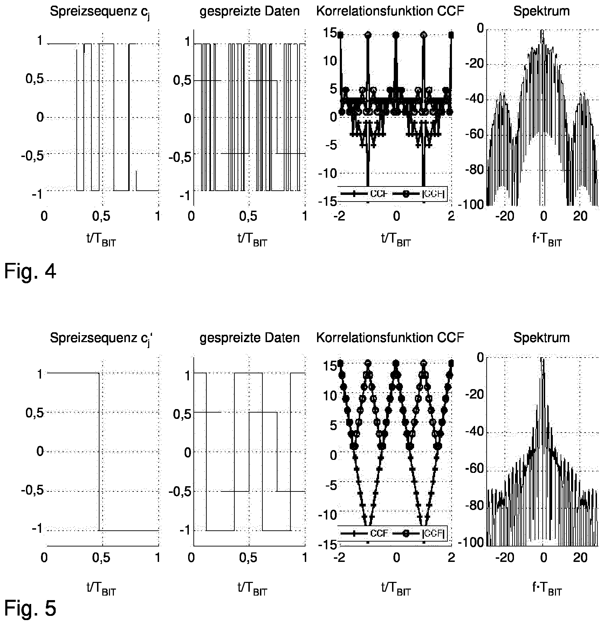

In dem linken Diagramm der Figur 4 ist eine pseudozufällige Spreizsequenz (PRBS) cⱼ dargestellt. Die Spreizsequenz cⱼ umfasst 15 Elemente (Chips), im vorliegenden Fall (1, 1, 1, 1, -1, 1, -1, 1, 1, -1, -1, 1, -1, -1, -1). Im zweiten Diagramm von links ist die Bitfolge dᵢ = (1, -1, 1, -1) sowie die resultierende (spektral gespreizte) Chipfolge dargestellt. Diese Folge entspricht der Eingangssignalfolge sₖ des Sende-Impulsfilters 10' in Fig. 3.

Das dritte Diagramm zeigt die Korrelation zwischen dem empfangenen Signal r(t) (vgl. Fig. 3b) und der Spreizsequenz cⱼ. Aus dem Betrag der Korrelationsfunktion CCF sind die Bitgrenzen zu erkennen, die genau an den Stellen der Maxima der Korrelationsfunktion liegen. Das vierte Diagramm (ganz rechts) zeigt das Spektrum des gespreizten Sendesignals s(t). Im vorliegenden Beispiel wurde ein rechteckiger Sende-Impulse g_{TX}(t) verwendet. Eine andere Sendeimpulsform (z.B. mit einem Roll-Off-Faktor von 1) würde Signalanteile außerhalb des durch die vertikalen Linien gekennzeichneten Frequenzbereiches stark unterdrücken.

In Figur 5 sind die gleichen vier Diagramme für eine schmalbandige Chip-Sequenz c_{j'} dargestellt. Aufgrund ihrer Schmalbandigkeit ist eine derartige Chip-Sequenz nicht mehr für eine DSSS-Übertragung geeignet und wird deshalb auch nicht als "Spreizsequenz" bezeichnet. Im vorliegenden Beispiel ist diese c_{j'} = (1, 1, 1, 1, 1, 1, 1, -1, -1, -1, -1, -1, -1, -1, -1). Die Folge cⱼ enthält also genau einen Sprung von 1 auf -1 zwischen dem 7 und dem 8 Chip. Der Sprung von 1 auf -1 ist damit (beinah) in der Mitte der Folge. Durch die Multiplikation der zu übertragenden Bitfolge dᵢ (im vorliegenden Beispiel 1, -1, 1, -1, in der Darstellung mit 0,5 skaliert) mit der Chip-Sequenz cⱼ' wird de facto eine Manchestercodierung der Bitfolge di (vgl. Fig. 3) erreicht, wobei ein "1"-Bit mit einer fallenden Flanke und eine "-1"-Bit mit einer steigenden Flanke codiert wird. Die dazugehörige Korrelationsfunktion ist dreieckig und das Spektrum des gesendeten Signals signifikant schmalbandiger als im vorangegangenen Beispiel einer der Fig. 4.

Eine breitbandige Spreizsequenz unterscheidet sich von einer schmalbandigen Chip-Sequenz zumindest dadurch, dass in der breitbandigen Spreizsequenz zumindest zwei Vorzeichenwechsel unmittelbar aufeinander folgen. Im Gegensatz dazu weist eine schmalbandige (für eine schmalbandige Übertragung geeignete) Chip-Sequenz keine zwei aufeinander folgenden Vorzeichenwechsel auf. Das heißt eine schmalbandige Chip-Sequenz beinhaltet weder die Folge {1, -1, 1} noch die Folge {-1, 1, -1}. Die schmalbandige Chip-Sequenz beinhaltet auch keinen Vorzeichenwechsel nach dem ersten und vor dem letzten Chip. Das heißt die Sequenzen {1,1,1,1,1,1,-1} und {-1,-1,-1,-1,-1,-1,1} sind nach diesem Kriterium auch nicht schmalbandig, obwohl nur ein Vorzeichenwechsel auftritt. Für die Beurteilung dieses Unterscheidungskriteriums kann die Sequenz cⱼ zyklisch fortgesetzt werden (wie bereits erwähnt ist j gleich k mod L_{C}).

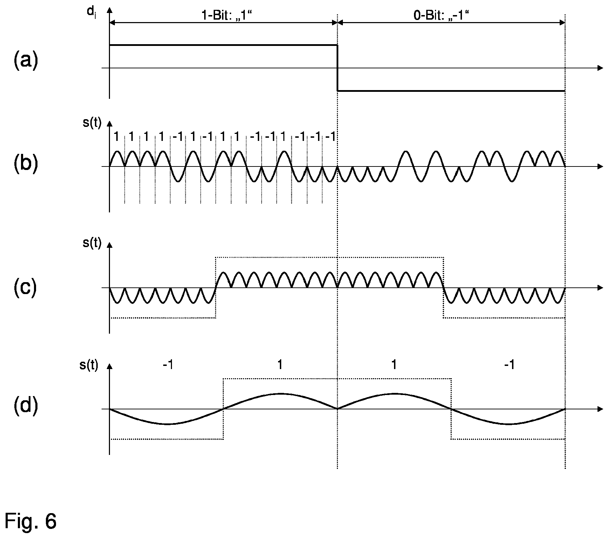

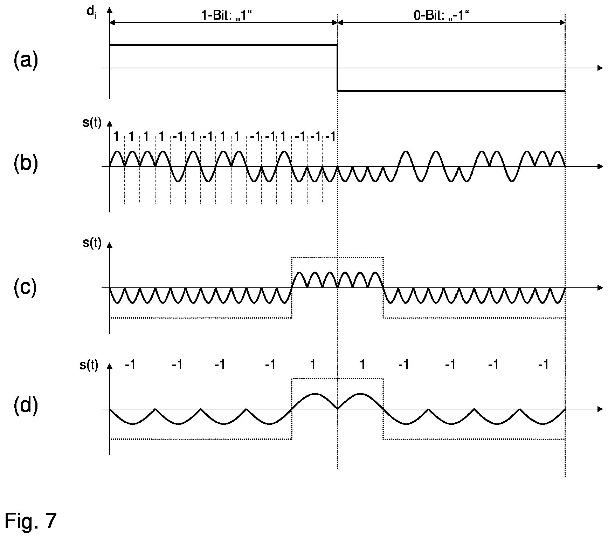

Bei "echten" Spreizsequenzen ist eine senderseitige Reduktion der Chiprate daher nicht möglich (vgl. Erläuterung zu Fig. 6 und 7). Schmalbandige Chip-Sequenzen, ermöglichen jedenfalls eine Reduktion der Symbol-Rate (vgl. Erläuterung zu Fig. 6 und 7), da zwei oder mehr aufeinander folgende gleiche Chips (d.h. zwei oder mehr aufeinander folgende "1"-Chips oder "-1"-Chips) senderseitig zu einem Symbol zusammengefasst werden können. Bei dem vorherigen Beispiel der symmetrischen Manchestercodierung mit der Chip-Sequenz {1, 1, 1, 1, 1, 1, 1, -1, -1, -1, -1, -1, -1, -1, -1} kann für die sieben "1"-Chips ein Symbol (d.h. eine Impulsantwort g_{TX}(t-k·T_{SYMB})) gesendet werden und für die acht "-1"-Chips ein Symbol (d.h. eine Impulsantwort -g_{TX}(t-k·T_{SYMB})), was zu einer Reduktion der Symbolrate von 600 kBaud auf 80 kBaud führt.

Bei Verwendung der (pseudozufälligen) Spreizsequenz cⱼ wird die Signalenergie auf große Teile innerhalb des durch die senkrechten Linien gekennzeichneten Frequenzbereichs verteilt, während sich die Energie bei manchesterkodierten Bits im Wesentlichen um den Koordinatenursprung (f·T_{Bit} = 0) verteilt. Der DSSS-Empfänger kann bei entsprechender Anpassung der Impulsantwort x(t) des Matched-Filter 40" auch für den Empfang schmalbandiger Signale verwendet werden, sofern senderseitig entsprechend schmalbandige Chip-Sequenzen verwendet werden, beispielsweise eine Sprungfolge wie im linken Diagramm in Fig. 5 gezeigt. Die konkrete Implementierung des DSSS-Senders (Fig. 3a) und insbesondere die des DSSS-Empfängers (Fig. 3b) spielt dabei keine Wesentliche Rolle. Wie später noch erläutert wird, kann jedoch bei der Verwendung von schmalbandigen Chip-Sequenzen (die dann das Spektrum nicht mehr spreizen) die Baudrate (Modulationssymbolrate) senderseitig signifikant reduziert werden (im Vergleich zum "normalen" DSSS-Betrieb).

Der in Fig. 3b dargestellte Empfänger zeigt z.B. eine einstufige Frequenzumsetzung vom HF-Band in das Basisband. Es ist jedoch auch eine zwei- oder mehrstufige Mischung möglich. Unterschiedliche Komponenten des Senders oder des Empfängers können wahlweise durch Software verwirklicht werden, die durch geeignete Signalprozessoren ausgeführt wird. Das Hochfrequenz-Frontend des Senders und des Empfängers wird in der Regel in Analogtechnik implementiert sein.

Im Schmalbandbetrieb kann bei einem DSSS-Sender gemäß Fig. 3a der Sender mit einer signifikant reduzierten Symbolrate (Baud-Rate) betrieben werden, beispielsweise wenn eine stufenförmige Chip-Sequenz c_{j'} verwendet wird. Dadurch kann die Bandbreite des Spektrums des Sendesignals s(t) bzw. s_{RF}(t) weiter reduziert werden. In Figur 6 ist unter anderem die DSSS-Übertragung von zwei Bits und einer 15-fachen Spreizung (Spreizsequenz mit 15 Chips) anhand von Zeitdiagrammen dargestellt. Im vorliegenden Beispiel wird von einem DSSS-Übertragungssystem gemäß Fig. 3 ausgegangen, welches mit einer Symbolrate von 600 kBaud (600000 Chips pro Sekunde) und einem Spreizfaktor L_{C} von 15 arbeitet.

Das Diagramm der Fig. 6a zeigt die zwei Bits dᵢ={1, -1}, wobei eine "logische 0" durch -1 und eine "logische 1" durch +1 repräsentiert wird. Diagramm (b) zeigt das resultierende Sendesignal s(t) bei Verwendung einer pseudo-zufälligen Spreizsequenz, im vorliegenden Fall {1, 1, 1, 1, -1, 1, -1, 1, 1, -1, -1, 1, -1, -1, -1}. Entsprechend der Polarität des zu übertragenen Bits wird die erwähnte Spreizsequenz invertiert oder nicht invertiert ausgesendet, wobei für jedes Chip ein entsprechendes Symbol mit der entsprechenden Polarität erzeugt wird. Die Symbole entsprechen dabei der Impulsantwort g'_{TX}(t-k·T_{CHIP}) des senderseitigen Filters (siehe Fig. 3a, Filter 10) und die Summe aller Pulse ergibt das im Diagramm der Fig. 6b dargestellte Sendesignal s(t). Das Spektrum des resultierenden Sendesignals s(t) ist entsprechend der spektralen Eigenschaften der pseudo-zufälligen Spreizsequenz verhältnismäßig breitbandig.

In dem Diagramm der Fig. 6c ist die gleiche Situation dargestellt wie in Fig. 6b mit dem Unterschied, dass die verwendete Chip-Sequenz cⱼ keine (pseudo-zufällige und daher breitbandige) Spreizsequenz ist, sondern den Verlauf einer Sprungfunktion aufweist. Das heißt, die pseudo-zufällige Spreizsequenz cⱼ = {1, 1, 1, 1, -1, 1, -1, 1, 1, -1, -1, 1, -1, -1, -1} wird durch die schmalbandige Chip-Sequenz cⱼ' = {-1, -1, -1, -1, -1, -1, -1, 1, 1, 1, 1, 1, 1, 1, 1} ersetzt. Im vorliegenden Beispiel besteht die schmalbandige Chip-Sequenz demnach aus sieben aufeinander folgenden "-1"-Chips und acht aufeinander folgenden "1"-Chips, wobei für jeden Chip ein entsprechendes Symbol (entsprechend der Impulsantwort des Filters 10) erzeugt wird. Durch die spezielle Wahl der Chip-Sequenz cⱼ' (sieben Mal "-1" und acht Mal "1") wird eine beinah symmetrische Manchester-Codierung der zu übertragenden Bits bewirkt. Empfängerseitig kann diese geringfügige Unsymmetrie toleriert werden. Gemäß dem Diagramm aus Fig. 6c werden jedoch wie bei der DSSS-Übertragung 15 Symbole ausgesendet. Eine weitere Reduktion der Bandbreite wird erreicht, wenn die Symbolrate entsprechend reduziert wird. Im vorliegenden Fall der symmetrischen Manchester-Codierung kann die Symbolrate von den erwähnten 600 kBaud auf 80 kBaud (80000 Chips pro Sekunde reduziert werden), wenn pro Bit nur mehr zwei Symbole übertragen werden. Dazu muss lediglich senderseitig die Abtastperiode T_{SYMB} (siehe Fig. 3a) entsprechend vergrößert und die Taktrate für den (digitalen) Filter 10 entsprechend reduziert werden. Aus einem Impuls g_{TX}(t) wird ein entsprechend verbreiteter Impuls g"_{TX}(t) = g_{TX}(t/R), wobei R dem Faktor entspricht, um den die Baudrate reduziert wird, im vorliegenden Fall ist R=600/80=7,5. Gruppen von "1"-Chips werden zu einem ersten Symbol zusammengefasst, und Gruppen von "-1"-Chips werden zu einem zweiten Symbol zusammengefasst. Für jedes Symbol wird dann ein entsprechender Impuls g"_{TX}(t) gesendet. Wie oben schon erwähnt müssen die Gruppen von Chips, die jeweils zu einem Symbol zusammengefasst werden nicht zwangsläufig gleich groß sein (d.h. die gleiche Anzahl von Chips aufweisen). Es genügt wenn die Gruppen ungefähr die gleiche Anzahl von Chips aufweisen (sieben Mal "-1" und acht Mal "1"). Wie groß das Ungleichgewicht sein darf, hängt von der jeweiligen Implementierung ab. Die Chipsequenz wird also entsprechend dezimiert, ohne dass deren Signalverlauf signifikant geändert werden würde. Empfängerseitig können die gleichen Algorithmen wie im DSSS-Betrieb (d.h. mit pseudo-zufälliger Spreizfolge) verwendet werden. Das heißt, der Empfänger arbeitet weiter mit der für eine breitbandige DSSS-Übertragung notwendigen vollen Symbolrate (im vorliegenden Beispiel 600 kBaud). Wie bereits erwähnt ist empfängerseitig lediglich eine Anpassung der Impulsantwort des Matched-Filter 40" (siehe Fig. 3b) erforderlich.

Figur 7 zeigt die gleichen Diagramme wie Fig. 6, jedoch für den Fall einer unsymmetrischen Manchestercodierung der zu übertragenden Bits. Im vorliegenden Beispiel ist die schmalbandige Chip-Sequenz cⱼ = {-1, -1, -1, -1, -1, -1, -1, -1, -1, -1, -1, -1, 1, 1, 1}. Das resultierende Sendesignal ohne Symbolratenreduktion ist in Fig. 7c dargestellt. Ähnlich wie im vorangegangenen Beispiel kann senderseitig die Symbolrate reduziert werden. Anstelle von 15 Chips werden pro Bit nur mehr fünf Symbole gesendet (siehe Fig. 7d), was eine auf 200 kBaud reduzierte Symbolrate bedeutet. Bei einer stufenförmigen Spreizsequenz kann die Baudrate zumindest um den größten gemeinsamen Teiler (im vorliegenden Beispiel 3) aus der Anzahl der "-1"-Chips (im vorliegenden Beispiel 12) und der Anzahl der "1"-Chips (im vorliegenden Beispiel 3) reduziert werden.

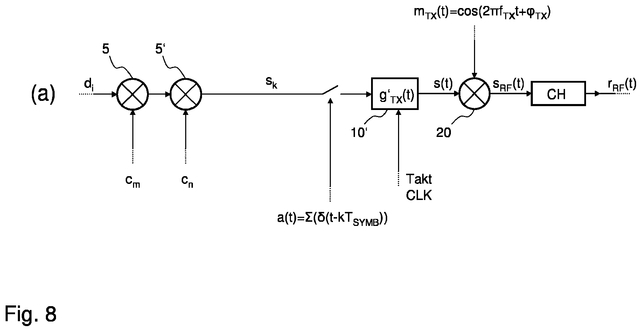

Die in den vorangegangenen Beispielen dargestellte Verwendung einer schmalbandigen Chip-Sequenz (statt einer breitbandigen Spreizsequenz) und eine entsprechend reduzierte Symbolrate kann auch bei der Verwendung verketteter Spreiz-Schemata verwendet werden. Ein Beispiel eines geeigneten Senders ist in Fig. 8 dargestellt. Im DSSS-Betrieb werden z.B. zwei pseudo-zufällige Sequenzen cₙ (innere Sequenz) und cₘ (äußere Sequenz) verwendet.

Für den Schmalbandbetrieb wird die innere Sequenz insbesondere konstant mit "1" oder "-1" gefüllt (also fünfzehn "1" oder fünf zehl "-1"), während die äußere Sequenz wie im vorangegangenen Beispiel bspw. mit einer Chip-Sequenz für eine symmetrische oder unsymmetrische Manchester-Codierung gewählt wird. Eine Reduzierung der Symbolrate (im Vergleich zum breitbandigen DSSS-Betrieb) ist dann über die innere Spreizung hinaus auf einen Wert möglich, der für die Synchronisation auf die schmalbandige äußere Sequenz erforderlich ist.

Beispielsweise kann bei einer 15×15-fachen verketten Spreizung senderseitig die Symbolrate von bspw. 600 kChip/s um den Faktor 75 (15×5) reduziert werden (8 kChip/s), insofern empfängerseitig die innere Chip-Sequenz konstant zu "+1" oder "-1" und die äußere Chip-Sequenz bspw. zu {1, 1, 1, 1, 1, 1, 1, 1, 1, 1, -1, -1, -1, -1, -1} (zehn "1" gefolgt von fünf "-1") gewählt wird Gemäß dem vorliegenden Beispiel synchronisiert sich der DSSS-Empfänger zunächst mit Hilfe der Akquisitionseinheit (siehe z.B. Fig. 3b) auf die innere Spreizsequenz cₙ und anschließend auf die äußere Spreizsequenz cₘ. Hierzu werden vor den eigentlichen Daten (der Payload) bspw. ein einfach (mit der inneren Chip-Sequenz) gespreizter Bereich sowie ein zweifach (also verkettet) gespreizter Bereich mit bspw. gleicher Chiprate gesendet, deren jeweilige Daten aus dem Empfänger bekannten Trainingssequenzen bestehen.

Da die innere Sequenz konstant mit "1" oder "-1" gefüllt wird, kann bei der Akquisition betreffend die innere Chip-Sequenz cₙ möglicherweise keine Informationen über die Bitgrenzen gewonnen. Zumindest kann jedoch der Frequenzfehler f_{E} des Empfangssignals (im Rahmen der Genauigkeit der Akquisition auf die innere Spreizung) bestimmt werden.

### Bezugszeichenliste

- 5: Multiplizierer (Spreizung)
- 10, 10': Filter (senderseitig)
- 20: Mischer (Frequenzumsetzung senderseitig)
- 30: Mischer (Frequenzumsetzung empfängerseitig)
- 31: Mischer (Frequenzkorrektur empfängerseitig)
- 40,40': Mached-Filter (empfängerseitig)
- 40": Filter (empfängerseitig)
- 50: Entscheider-Einheit
- 51: Tracking-Einheit
- 52: Aquisitions-Einheit
- dᵢ: Bitfolge (i = └k/L_{C}┘)
- k: Zeitindes (k = 1, 2, ...)
- L_{C}: Sequenzlänge
- j: Sequenzindex (j = k mod L_{C})
- sₖ: Chipfolge
- s(t): Sendesignal (Basisband)
- s_{RF}(t): Sendesignal (HF-Band)
- r_{RF}(t): Empfangssignal (HF-Band)
- r(t): Empfangssignal (Basisband)
- g_{TX}(t): Impulsantwort
- g_{RX}(t): Impulsantwort
- h_{MF}(t): Impulsantwort
- x(t): Impulsantwort
- δ(t): Dirac-Funktion
- f_{TX}: Trägerfrequenz senderseitig
- f_{RX}: Trägerfrequenz empfängerseitig
- ϕ_{TX}: Trägerphase senderseitig
- ϕ_{RX}: Trägerphase empfängerseitig

## Patentansprüche

1. System, das für eine Spread-Spectrum und eine schmalbandige Datenübertragung konfigurierbar ist und folgendes aufweist:
einen DSSS-Sender, der dazu ausgebildet ist, eine zu übertragende Bitfolge (dᵢ) mit Hilfe einer Chip-Sequenz (cⱼ, cⱼ') in eine Chipfolge (sₖ) umzusetzen und eine mit der Chipfolge (sₖ) korrespondierende Folge von Impulsen (s(t)) zu senden, und
einen DSSS-Empfänger, der dazu ausgebildet ist, vom Sender gesendete Impulse (s(t)) über einen Übertragungskanal zu empfangen, und die empfangenen Impulse (r(t)) mit Hilfe eines Filters (40") zu filtern, wobei der Filter (40") eine Impulsantwort (x(t)) aufweist, welche von der Chip-Sequenz (cⱼ, cⱼ') abhängt,
wobei für die Spread-Spectrum-Datenübertragung als Chip-Sequenz (cⱼ) eine Spreizsequenz einstellbar ist, und
wobei für die schmalbandige Datenübertragung eine Chip-Sequenz (cⱼ') und eine entsprechende Impulsantwort (x(t)) des Filters (40") einstellbar ist, und die Chip-Sequenz (cⱼ') keine Folge mit zwei direkt aufeinanderfolgenden Vorzeichenwechseln umfasst und darüber hinaus nach dem ersten und vor dem letzten Chip der Chip-Sequenz (cⱼ') kein Vorzeichenwechsel auftritt.

2. System gemäß Anspruch 1, wobei die Spreiz-Sequenz (cⱼ) eine pseudo-zufällige Chip-Sequenz ist oder eine aus einer oder mehreren pseudo-zufälligen Chip-Sequenzen abgeleitete Chip-Sequenz ist.

3. System gemäß Anspruch 1, wobei die Spreiz-Sequenz (cⱼ) zumindest ein Mal zwei aufeinander folgende Vorzeichenwechsel aufweist.

4. System gemäß einem der Ansprüche 1 bis 3, wobei bei schmalbandiger Datenübertragung die Chip-Sequenz (cⱼ') eine Sprungfolge ist.

5. System gemäß einem der Ansprüche 1 bis 4, wobei bei schmalbandiger Datenübertragung die Chip-Sequenz (cⱼ') eine unsymmetrische Sprungfolge ist.

6. System gemäß einem der Ansprüche 1 bis 5,
wobei der DSSS-Sender dazu ausgebildet ist, die Folge von Impulsen mit einer einstellbaren Symbolrate (T_{SYMB}⁻¹) auszusenden,
wobei die Symbolrate für eine Spread-Spectrum-Datenübertragung einer vorgebbaren ersten Symbolrate (T_{CHIP}⁻¹) entspricht und
wobei die Symbolrate für eine schmalbandige Übertragung einer vorgebbaren zweiten Symbolrate entspricht, die gegenüber der ersten Symbolrate (T_{CHIP}⁻¹) reduziert ist, und für mehrere gleiche, aufeinander folgende Chips jeweils nur ein entsprechender Impuls (g"_{TX}(t)) gesendet wird, sodass Gruppen von Chips gleichen Vorzeichens zu Symbolen zusammengefasst werden.

7. System gemäß Anspruch 6,
wobei zur schmalbandigen Datenübertragung die Chip-Sequenz (cⱼ') eine vorgebbare Anzahl von Chips aufweist, wovon ein erster Anteil auf eine zusammenhängende Folge von "1" und ein zweiter Anteil auf eine zusammenhängende Folge von "-1" entfällt.

8. System gemäß Anspruch 6 oder 7,
wobei für jedes Symbol ein Impuls (g"_{TX}(t)) gesendet wird und die gesendeten Impulse (g"_{TX}(t)) die gleiche Breite aufweisen, und
wobei die Gruppen von Chips, die zu einem Symbol zusammengefasst werden, ungefähr die gleiche Anzahl von Chips aufweisen.

9. System gemäß Anspruch 7 oder 8, wobei die zweite Symbolrate derart einstellbar ist, dass für jedes zu übertragende Bit zwei Symbole übertragen werden, wodurch eine symmetrische Manchester-Codierung der zu übertragenden Bits erreicht wird.

10. DSSS-Sender, der dazu ausgebildet ist, eine zu übertragendes Bitfolge (dᵢ) mit Hilfe einer Chip-Sequenz (cⱼ, cⱼ') in eine Chipfolge (sₖ) umzusetzen und eine der Chipfolge (sₖ) entsprechende Folge von Impulsen (g"_{TX}(t)) zu senden,
wobei der Sender für einen Spread-Spectrum-Betrieb und einen Schmalbandbetrieb konfigurierbar ist und wobei
im Spread-Spectrum-Betrieb als Chip-Sequenz (cⱼ) eine Spreizsequenz einstellbar ist, und wobei
im Schmalbandbetrieb eine Chip-Sequenz (cⱼ') einstellbar ist, die keine Folge mit zwei direkt aufeinander folgenden Vorzeichenwechseln umfasst und darüber hinaus nach dem ersten und vor dem letzten Chip der Chip-Sequenz (cⱼ') kein Vorzeichenwechsel auftritt.

11. DSSS-Sender gemäß Anspruch 12, der dazu ausgebildet ist, die Folge von Impulsen mit einer einstellbaren Symbolrate (T_{SYMB}⁻¹) auszusenden, wobei die Symbolrate im Spread-Spectrum-Betrieb einer vorgebbaren ersten Symbolrate (T_{CHIP}⁻¹) entspricht und wobei die Symbolrate im Schmalbandbetrieb einer vorgebbaren zweiten Symbolrate entspricht, die gegenüber der ersten Symbolrate (T_{CHIP}⁻¹) reduziert ist und für mehrere gleiche, aufeinander folgende Chips jeweils nur ein entsprechender Impuls (g"_{TX}(t)) gesendet wird, sodass Gruppen von Chips gleichen Vorzeichens zu Symbolen zusammengefasst werden.

12. DSSS-Empfänger zum Empfang von Signalen, die mit einem Sender gemäß Anspruch 10 gesendet werden; der Empfänger weist einen Filter (40") mit einstellbarer Impulsantwort (x(t)) auf, dem die vom Sender empfangenen Impulse (r(t)) zugeführt sind,
wobei die Impulsantwort (x(t)) des Filters abhängig von der senderseitig eingestellten Chip-Sequenz einstellbar ist.

## Claims

1. System that is configurable for a spread spectrum and a narrowband data transmission and has the following:
a DSSS transmitter that is designed to convert a bit succession (dᵢ) that is to be transmitted into a chip succession (sₖ) using a chip sequence (cⱼ, cⱼ') and to send a succession of impulses (s(t)) that corresponds to the chip succession (sₖ), and
a DSSS receiver that is designed to use a transmission channel to receive impulses (s(t)) sent by the transmitter, and to filter the received impulses (r(t)) using a filter (40"), the filter (40") having an impulse response (x(t)) that is dependent on the chip sequence (cⱼ, cⱼ'),
wherein for the spread spectrum data transmission the chip sequence (cⱼ) that can be set is a spread sequence, and
wherein for the narrowband data transmission a chip sequence (cⱼ') and a corresponding impulse response (x(t)) of the filter (40") can be set, and the chip sequence (cⱼ') does not comprise a succession having two directly successive arithmetic sign changes and, furthermore, an arithmetic sign change does not occur after the first and before the last chip in the chip sequence (cⱼ').

2. System according to Claim 1, wherein the spread sequence (cⱼ) is a pseudorandom chip sequence or is a chip sequence derived from one or more pseudorandom chip sequences.

3. System according to Claim 1, wherein the spread sequence (cⱼ) has two successive arithmetic sign changes at least once.

4. System according to one of Claims 1 to 3, wherein in the case of narrowband data transmission the chip sequence (cⱼ') is a hopping sequence.

5. System according to one of Claims 1 to 4, wherein in the case of narrowband data transmission the chip sequence (cⱼ') is an asymmetric hopping sequence.

6. System according to one of Claims 1 to 5,
wherein the DSSS transmitter is designed to transmit the succession of impulses at an adjustable symbol rate (T_{SYMB}⁻¹), wherein the symbol rate for a spread spectrum data transmission corresponds to a prescribable first symbol rate (T_{CHIP}⁻¹), and
wherein the symbol rate for a narrowband transmission corresponds to a prescribable second symbol rate, which is reduced in comparison with the first symbol rate (T_{CHIP}⁻¹), and only one corresponding impulse (g"_{TX}(t)) is sent for each of a plurality of like successive chips, so that groups of chips having the same arithmetic sign are combined to form symbols.

7. System according to Claim 6,
wherein in the narrowband data transmission the chip sequnence (cⱼ') has a prescribable number of chips, a first portion of which is allotted to a contiguous succession of "1"s and a second portion of which is allotted to a contiguous succession of "-1"s.

8. System according to Claim 6 or 7,
wherein for each symbol an impulse (g"_{TX}(t)) is sent and the sent impulses (g"_{TX}(t)) have the same width, and
wherein the groups of chips that are combined to form a symbol have approximately the same number of chips.

9. System according to Claim 7 or 8, wherein the second symbol rate is adjustable such that two symbols are transmitted for each bit that is to be transmitted, thus achieving symmetric Manchester coding for the bits that are to be transmitted.

10. DSSS transmitter that is designed to convert a bit succession (dᵢ) that is to be transmitted into a chip succession (sₖ) using a chip sequence (cⱼ, cⱼ') and to send a succession of impulses (g"_{TX}(t)) that corresponds to the chip succession (sₖ),
wherein the transmitter is configurable for a spread spectrum mode and a narrowband mode and wherein
in the spread spectrum mode chip sequence (cⱼ) that can be set is a spread sequence, and wherein
in the narrowband mode a chip sequence (cⱼ') can be set that does not comprise a succession having two directly successive arithmetic sign changes and, furthermore, an arithmetic sign change does not occur after the first and before the last chip in the chip sequence (cⱼ').

11. DSSS transmitter according to Claim 10, which is designed to transmit the succession of impulses at an adjustable symbol rate (T_{SYMB}⁻¹), wherein the symbol rate in the spread spectrum mode corresponds to a prescribable first symbol rate (T_{CHIP}⁻¹) and wherein the symbol rate in the narrowband mode corresponds to a prescribable second symbol rate, which is reduced in comparison with the first symbol rate (T_{CHIP}⁻¹), and only one corresponding impulse (g"_{TX}(t)) is sent for each of a plurality of like successive chips, so that groups of chips having the same arithmetic sign are combined to form symbols.

12. DSSS receiver for receiving signals that are sent using a transmitter according to Claim 10, wherein the receiver has a filter (40") having an adjustable impulse response (x(t)) to which the impulses (r(t)) received from the transmitter are supplied,
the input response (x(t)) of the filter being adjustable on the basis of the chip sequence that is set at the transmitter end.

## Revendications

1. Système apte à être configuré pour un transfert de données à large spectre ou en bande étroite, le système présentant :
un émetteur DSSS configuré pour convertir à l'aide d'une séquence de chips (cⱼ, cⱼ') une succession de bits (dᵢ) en une succession de chips (sₖ) et pour envoyer une succession d'impulsions (s(t)) qui correspond à la succession de chips (sₖ),
un récepteur DSSS configuré pour recevoir par l'intermédiaire d'un canal de transfert les impulsions (s(t)) envoyées par l'émetteur et pour filtrer les impulsions reçues (r(t)) à l'aide d'un filtre (40"), le filtre (40") présentant une réponse impulsionnelle (x(t)) qui dépend de la séquence de chips (cⱼ, cⱼ'),
une séquence d'étalement pouvant être établie comme séquence de chips (cⱼ) pour le transfert de données à large spectre,
une séquence de chips (cⱼ') et une réponse impulsionnelle (x(t)) correspondante du filtre (40") pouvant être établies pour le transfert de données en bande étroite, la séquence de chips (cⱼ') ne comprenant pas de succession contenant deux changements de signes immédiatement successifs et aucun changement de signe n'intervenant en outre après le premier et avant le dernier chip de la séquence de chips (cⱼ').

2. Système selon la revendication 1, dans lequel la séquence de chips (cⱼ) est une séquence de chips pseudo-aléatoire ou une séquence de chips dérivée d'une ou de plusieurs séquences de chips pseudo-aléatoires.

3. Système selon la revendication 1, dans lequel la séquence de chips (cⱼ) présente au moins une fois deux changements de signe successifs.

4. Système selon l'une des revendications 1 à 3, dans lequel la séquence de chips (cⱼ') d'un transfert de données en bande étroite est une succession de sauts.

5. Système selon l'une des revendications 1 à 4, dans lequel la séquence de chips (cⱼ') d'un transfert de données en bande étroite est une succession de sauts asymétrique.

6. Système selon l'une des revendications 1 à 5, dans lequel l'émetteur DSSS est configuré pour envoyer la succession d'impulsions à un taux de symboles (T_{SYMB}⁻¹) réglable,
le taux de symboles d'un transfert de données à large spectre correspondant à un premier taux de symboles (T_{CHIP}⁻¹) prédéterminable et
le taux de symboles d'un transfert de données en bande étroite correspondant à un deuxième taux de symboles prédéterminable réduit par rapport au premier taux de symboles (T_{CHIP}⁻¹) et pour plusieurs chips identique successifs, seule une impulsion (g"_{TX}(t)) correspondante est envoyée, de telle sorte que des groupes de chips de même signe sont réunis en symboles.

7. Système selon la revendication 6, dans lequel pour un transfert de données en bande étroite, la séquence de chips (cⱼ') présente un nombre prédéterminable de chips dont une première fraction revient à une succession ininterrompue de "1" et une deuxième fraction à une succession ininterrompue de "-1".

8. Système selon les revendications 6 ou 7, dans lequel une impulsion (g"_{TX}(t)) est envoyée pour chaque symbole et les impulsions (g"_{TX}(t)) envoyées ont toutes la même longueur, les groupes de chips réunis en un symbole présentant sensiblement le même nombre de chips.

9. Système selon les revendications 7 ou 8, dans lequel le deuxième taux de symboles peut être ajusté de telle sorte que deux symboles soient transmis pour chaque bit à transmettre, ce qui permet d'obtenir un codage symétrique de Manchester des bits à transmettre.

10. Emetteur DSSS configuré pour convertir à l'aide d'une séquence de chips (cⱼ, cⱼ') une succession de bits (dᵢ) en une succession de chips (sₖ) et pour envoyer une succession d'impulsions (g"_{TX}(t)) qui correspond à la succession de chips (sₖ),
l'émetteur pouvant être configuré pour un fonctionnement à large spectre et pour un fonctionnement en bande étroite,
une séquence d'étalement pouvant être établie comme séquence de chips (cⱼ) pour le transfert de données à large spectre,
une séquence de chips (cⱼ') ne comprenant pas de succession contenant deux changements de signes immédiatement successifs et dans laquelle aucun changement de signe n'intervient en outre après le premier et avant le dernier chip de la séquence de chips (cⱼ') pouvant être établie pour le transfert de données en bande étroite.

11. Emetteur DSSS selon la revendication 12, configuré pour envoyer la succession d'impulsions à un taux de symboles (T_{SYMB}⁻¹) réglable,
le taux de symboles d'un transfert de données à large spectre correspondant à un premier taux de symboles (T_{CHIP}⁻¹) prédéterminable et
le taux de symboles d'un transfert de données en bande étroite correspondant à un deuxième taux de symboles prédéterminable réduit par rapport au premier taux de symboles (T_{CHIP}⁻¹) et pour plusieurs chips identiques successifs, seule une impulsion (g"_{TX}(t)) correspondante est envoyée, de telle sorte que des groupes de chips de même signe sont réunis en symboles.

12. Récepteur DSSS destiné à recevoir des signaux envoyés par un émetteur selon la revendication 10, le récepteur présentant un filtre (40") présentant une réponse impulsionnelle (x(t)) réglable auquel les impulsions (r(t)) reçues par l'émetteur sont apportées, la réponse impulsionnelle (x(t)) du filtre pouvant être réglée en fonction de la séquence de chips établie côté émetteur.
